# EUROPÄISCHE PATENTANMELDUNG

(11) **EP 4 071 123 A1**
(43) Veröffentlichungstag der Anmeldung: **12.10.2022**
(21) Anmeldenummer: 22167018.5
(22) Anmeldetag: 06.04.2022
(51) Int. Cl.: C04B 18/28, E04F 15/18, C04B 18/02, C04B 30/00, C04B 111/60

(54) **AUSGLEICHSSCHÜTTUNG MIT MINERALISIERTEN HOLZSPÄNEN**

(30) Priorität: 09.04.2021 DE 202021101899 U
(71) Anmelder: Cemwood GmbH, 39126 Magbeburg (DE)
(72) Erfinder: Müller, Marc M., 21438 Brackel (DE)
(74) Vertreter: Keil & Schaafhausen Patentanwälte PartGmbB

(57) **Zusammenfassung**

Ausgleichsschüttung für Fußbodenaufbauten im Wesentlichen bestehend aus mineralisierten Holzspänen, wobei ein Teil der Holzspäne ein Längen-Breitenverhältnis von ≤ 3:1 aufweist und dass der Anteil der Holzspäne mit dem Längen-Breitenverhältnis von ≤ 3:1 am gesamten Volumen der Ausgleichsschüttung > 50 Vol. % beträgt.

## Beschreibung

Die Erfindung betrifft Ausgleichsschüttungen aus mineralisierten bzw. mineralisch ummantelten Holzspänen, die insbesondere für Fußbodenaufbauten Verwendung findet.

Lose bzw. ungebundene Schüttungen zum Höhenausgleich sind seit langem ein Element innerhalb von Gesamtfußbodenaufbauten. Die sogenannten Ausgleichsschüttungen dienen dem Zweck, ein bestimmtes konstruktionsbedingtes Höhenniveau, beispielsweise eines Fußbodens, zu erzielen. Ausgleichsschüttungen können demnach insbesondere dazu verwendet werden, einen entsprechenden Höhenausgleich zwischen einem Endbelag, beispielsweise einem Parkettboden oder einem keramischen Belag, auf einer Sohlplatte oder einer Geschoßdecke zu erzielen. Zudem dienen Ausgleichsschüttungen bei Gebäudeneubauten oder -sanierungen gleichsam zur niveaugerechten Aufnahme von Dämm- und Estrichlagen.

Als Ausgleichsschüttung kommen bislang hauptsächlich verschiedene, insbesondere feinkörnige, Materialien zur Anwendung, darunter beispielsweise Porenbetongranulat, Perlite, Blähton und Blähschiefer.

Die Gebrauchstauglichkeit der Ausgleichsschüttungen bestimmt sich aus mechanischer Sicht maßgeblich durch zwei Kriterien. Demnach ist eine Ausgleichsschüttung insbesondere dann geeignet, wenn sie für die benötigte Anwendung, d. h. die vorhersehbaren Belastungen und Einflüsse, eine ausreichende Setzungssicherheit sowie eine ausreichende Lagesicherheit aufweist. Die Setzungssicherheit bestimmt die allgemeines höhenbezogene Dimensionsstabilität der Schüttungslage bei Belastung, beispielsweise durch statische Auflast. Die Lagesicherheit hingegen gibt Auskunft über das örtliche Verharrungsvermögen der einzelnen Bestandteile der Schüttung bei dynamischem Lasteintrag während der Nutzung.

Eine in Bezug zur Belastung zu gering gewählte Setzungssicherheit führt in erster Linie zu allgemeinen Absenkungen des Schüttungsaufbaus. Dahingegen führt eine zu geringe Lagesicherheit zu einzelnen flächenbezogenen Verformungen und Vertiefungen, bspw. sogenannten Gehgassen und ggf. zu weitergehenden Bauschäden.

Wenngleich stets versucht wird, die aus einer zu geringen Setzungssicherheit und/oder Lagesicherheit resultierenden Bauschäden, die neben Beschädigungen des Bodenbelags auch zu weiteren Schäden führen können, zu vermeiden, existiert derzeit auf nationaler oder europäischer Ebene kein bautechnisches Regelwerk, das die zu erfüllenden mechanischen Eigenschaften von losen, ungebundenen Ausgleichsschüttungen festlegt.

Ein Hinweis auf eine ausreichende Lagesicherheit findet sich lediglich pauschal in der DIN 18560 - Teil 2 "Estriche und Heizestriche auf Dämmschichten (schwimmende Estriche)" sowie in den Hinweisblättern 4.6 "Rohre, Leitungen und Einbauteile (2015" und 4.9 "Fertigteilestriche auf Calciumsulfat und Zementbasis (2020)". Danach ist die Verwendung einer losen, ungebundenen Ausgleichsschüttung dann möglich und zulässig, wenn die Funktionsfähigkeit der Ausgleichsschüttung nachgewiesen ist bzw. wenn die Ausgleichsschüttung lagestabil ist und sich während der Nutzung nicht verändert.

Dieser Umstand hat zur Folge, dass immer wieder Bauschäden in Folge des Einbaus von losen, ungebundenen Ausgleichsschüttungen zu beklagen sind, die insbesondere auf eine nicht ausreichende Lagestabilität, d. h. eine zu geringe Lagesicherheit, der losen, ungebundenen Ausgleichsschüttungen zurückzuführen sind.

Die Aufgabe der vorliegenden Erfindung besteht demnach darin, lose Ausgleichsschüttungen mit erhöhter Lagesicherheit bereitzustellen, die gleichzeitig ökologisch nachhaltig sind.

Diese Aufgabe wird mit der Erfindung durch eine Ausgleichsschüttung nach Anspruch 1 gelöst. Vorteilhafte Ausgestaltungen der Erfindung ergeben sich aus den Unteransprüchen.

Erfindungsgemäß besteht die Ausgleichsschüttung im Wesentlichen aus mineralisierten bzw. aus mineralisch ummantelten Holzspänen, wobei ein Teil der Holzspäne ein Längen-Breitenverhältnis von ≤ 3:1 aufweist und der Anteil der Holzspäne mit dem Längen-Breitenverhältnis von ≤ 3:1 am gesamten Volumen der Ausgleichsschüttung > 50 Vol. % beträgt.

Die mineralisierten Holzspäne aus Nadel oder Laubhölzern, dienen als ökologisches und nachhaltiges Ausgangsprodukt, wobei die Mineralisierung bzw. die mineralische Ummantelung neben der Stabilisierung des Einzelspans für eine erhöhte Oberflächenrauheit sorgt. Die mineralisierten, oberflächenrauen Holzspäne erhöhen den Gleitwiderstand bzw. die Reibung zwischen den einzelnen Holzspänen und begünstigen damit eine ausreichende Lagesicherheit.

Zudem kann ein Längen-Breitenverhältnis, d. h. ein Verhältnis der Ausdehnung eines jeden Holzspans in longitudinaler und transversaler Richtung, von kleiner oder gleich 3:1 (oder 3 zu 1), die Reibung und die Verkrallung der Holzspäne in der Ausgleichsschüttung begünstigen. Die Reibung beschreibt hierbei primär den Gleitwiderstand an den Kontaktflächen mindestens zweier Holzspäne, wobei die Verkrallung insbesondere auch eine Verkeilung und ein Zusammenwirken mehrerer Holzspäne untereinander berücksichtigt. Eine Verkrallung tritt dabei allerdings nie ohne das Vorhandensein von Kontaktflächen auf. Da die Holzspäne eine dreidimensionale Ausdehnung aufweisen, wird die Ausdehnung eines Holzspans in longitudinaler Richtung als die Richtung verstanden, in die der Holzspan seine maximale Ausdehnung aufweist. Die transversale Richtung wird demnach als eine beliebige Richtung orthogonal zur longitudinalen Richtung verstanden, wobei die maximale transversale Ausdehnung des Holzspans kleiner oder gleich dem Dreifachen der longitudinalen Ausdehnung sein sollte. Ein beispielhafter, erfindungsgemäßer Holzspan könnte demzufolge eine Länge von 6 mm und eine Breite von 3 mm und damit ein Längen-Breitenverhältnis von 2 zu 1 aufweisen. Durch die Wahl eines derartigen Längen-Breitenverhältnisses wird unabhängig von der Form der Holzspäne insbesondere die Schüttdichte und damit die Verkrallung der einzelnen Holzspäne untereinander optimiert. Es ist offensichtlich, dass nicht alle Holzspäne der Ausgleichsschüttung ein identisches Längen-Breitenverhältnis aufweisen, allerdings sollte nur ein kleiner Anteil der Holzspäne, vorzugsweise ≤ 30 %, der erfindungsgemäßen Ausgleichsschüttung ein Längen-Breitenverhältnis von > 3:1 aufweisen. Vorzugsweise weist ein Holzspan eine maximale Länge von 10 mm auf. Eine derartige maximale Ausdehnung eines Holzspans wird mitunter auch als Größtkorndimensionierung bezeichnet. Die Breite eines derartigen Holzspans beträgt bei einem Längen-Breitenverhältnis ≤ 3:1 folglich bevorzugt maximal 3,33 mm.

In Weiterbildung der Erfindung sind die Holzspäne kubisch länglich oder in Form von Hobelspänen ausgebildet, da die gewählte Form der Holzspäne einen entscheidenden Einfluss auf die Schüttdichte und somit auf die Verkrallung und die Größe und Anzahl an Kontaktflächen zwischen mehreren Holzspänen hat und sich damit auf die Lagesicherheit einer aus den Holzspänen gebildeten Ausgleichsschüttung auswirkt. Ein kubischer Holzspan weist vorzugsweise ein Längen-Breitenverhältnis zwischen 0,75:1 und 1,25:1, insbesondere etwa 1:1 auf. Ein noch gleichermaßen wirkender länglicher Holzspan weist hierzu ein maximales Längen-Breitenverhältnis von 3:1 auf. Es ist nachvollziehbar, dass aufgrund von Produktionsbedingungen, das Längen-Breitenverhältnis sämtlicher in einer Ausgleichsschüttung verwendeter Holzspäne nicht identisch ist. Gleichzeitig ist es offensichtlich, dass in einer Ausgleichsschüttung Holzspäne unterschiedlicher Formen vermengt werden können. Dabei hat sich gezeigt, dass eine Ausgleichsschüttung mit einem großen Anteil an Holzspänen in kubischer oder angenähert kubischer Form, die Lagesicherheit der Ausgleichsschüttung verbessert. Der Anteil dieser Holzspäne beträgt vorzugsweise > 50 Vol. %, stärker bevorzugt > 60 Vol. % und insbesondere > 70 Vol. %.

In einer bevorzugten Ausführungsform weisen die Holzspäne eine mineralische Ummantelung auf. Eine derartige Mineralisierung der Holzspäne kann mit Hilfe einer Vermengung der Holzspäne mit einer Bindemittelsuspension, beispielsweise unter Verwendung eines hydraulischen Bindemittels erfolgen. Erfindungsgemäß wird als Holzspan somit auch ein ummantelter Holzspan verstanden. Die Verwendung eines erfindungsgemäßen Längen-Breitenverhältnisses von ≤ 3:1 wird bei einem ummantelten Holzspann demnach für den Holzspan inklusive der Ummantelung bestimmt.

Als mineralisches Bindemittel werden bevorzugt Dolomit, Kalk, Anhydritbinder, Magnesiabindemittel, Gips und/oder Zement verwendet, da es sich hierbei um Stoffe handelt, die in der Bauindustrie üblich sind. Allgemein eignen sich besonders hydraulische Bindemittel aber auch hydraulische Kalke oder Bindemittel, die durch eine einhergehende Fermentierung entstehen. Hydraulische Bindemittel sind Bindemittel, die, im Gegensatz zum unhydraulischen Bindemittel, auch unter Anwesenheit von Wasser abbinden und wasserunlöslich sind. Dies sind beispielsweise Puzzolane, Trass, und Zement. Das Bindemittel liegt nach erfolgter Reaktion in hydratisierter Form vor.

Ferner kann die erfindungsgemäße Ummantelung der Holzspäne neben dem mineralischen Bindemittel weitere mineralische Feinstpartikel aufweisen. Dabei weisen vorzugsweise wenigstens 50 % der weiteren mineralischen Partikel einen Partikeldurchmesser von 0,05 bis 0,7 µm auf. Das Gewicht dieser Komponente beträgt hierbei bezogen auf das Bindemittel bis 2 %.

Zudem ist es bevorzugt, wenn der Anteil der mineralischen Feinstpartikel zwischen 0,5 und 2 Gew.-% bezogen auf das Gesamtgewicht der Ausgleichsschüttung beträgt. Dieses umfasst das Gewicht des Holzspans, des mineralischen Bindemittels und der mineralischen Feinstpartikel. Vorzugsweise kann der Anteil der mineralischen Feinstpartikel auch zwischen 0,5 und 1,5 Gew.-% und besonders bevorzugt bei etwa 1,3 Gew.-% bezogen auf das Gesamtgewicht der Schüttung liegen. Alternativ kann es vorteilhaft sein, wenn der Anteil der mineralischen Feinstpartikel zwischen 1 bis 6 Gew.-% bezogen auf die mineralische Bindemittelmenge beträgt. Durch einen entsprechend der vorangegangenen Angaben gewählten Anteil an Feinstpartikeln liegt ein ausreichender Anteil an Partikeln vor, um eine vollständige Ummantelung auf Nano-Ebene zu garantieren.

Der Anteil der Holzspäne mit erfindungsgemäßer Kornform, bezogen auf ein Schüttungsvolumen der Ausgleichsschüttung beträgt erfindungsgemäß > 50 Vol.-%, vorzugsweise > 60 Vol. % und insbesondere > 75 Vol. %. Wie bereits zuvor angedeutet, wird die Schüttungsdichtemaßgeblich durch die Größe, d. h. durch die Längen-Breitenverhältnisse der Holzspäne, sowie die Form der Holzspäne beeinflusst. Gleichzeitig kann so durch das Verhältnis von Holzspänen bezogen auf das Schüttvolumen die Eigenschaft der Wärme- und Schalldämmung mit beeinflusst werden, da hierdurch insbesondere die zwischen den Holzspänen befindlichen Luftmengen beeinflusst werden können. Durch den erfindungsgemäße Gestaltung der Holzspäne mit einem ausreichenden Anteil an Holzspänen (Holzspanfraktion) mit günstiger Kornform von > 50 Vol.-% kann eine geeignete Verkrallung der Holzspäne gewährleistet werden, sodass die in Form eines Mikroblockhaufwerks ausgebildete Ausgleichsschüttung eine große Lagesicherheit, d. h. eine große Lagestabilität aufweist.

In einer bevorzugten Ausgestaltung weist die Ausgleichsschüttung eine Schüttdichte von < 1000 kg/m³, vorzugsweise < 500 kg/m³, auf. Eine geringe Schüttdichte und damit ein geringes Gewicht pro Volumeneinheit wirkt sich positiv auf die Umweltbilanz (CO₂-Bilanz) beim Transport derartiger Ausgleichsschüttungen aus.

In Vergleichstests hat sich gezeigt, dass die erfindungsgemäße Ausgleichsschüttung mit mineralisierten Holzspänen eine im Vergleich zu anderen Schüttmaterialien hohe Lagestabilität aufweist.

Zum Nachweis der Ausbildung der Lagestabilität wurde ein Prüfregime entwickelt. Die diesem zu Grunde liegende Methodik basiert auf einem prinzipiellen mechanischen Verhalten von losen Ausgleichsschüttungen sich bei Einzellasteintrag den hierbei auftretenden Druckspannungen transversal (aufgrund sich aufbauender Schubkräfte) zu entziehen/auszuweichen. Wenn die sich aufbauenden Schubkräfte die innere Kohäsion des ausgebildeten Schüttungsgefüges (hervorgerufen durch Verkrallung und Reibung der einzelnen Komponenten) überschreiten, kommt es zu einem annähernd spontanen Stabilitätsversagen des Gefüges, das sich dann im transversalen Versatz der Schüttung ausdrückt und hiermit modellhaft das Verhalten von minder lagestabilen losen Schüttungen abbildet. Um die entsprechenden Größen der Kräfte darstellen zu können, erfolgt die Prüfung des Schüttungsgefüges bei einer kontinuierlichlinear zunehmend eingeleiteten Einzellast und in einer Darstellung als Kraft-Weg-Diagramm auf einem kalibrierten mechanischen Prüfstand.

Die Prüfungsparameter hierzu sind:
Schichtdicke der Schüttung: 100mm (variabel)
Einzellastfläche: 100×100mm² (direkt auf Schüttungsplanum)
Vorlast: 0,1kN
Lasteintrag/steigerung : linear mit 0,05kN/s
Wegvorgabe: 20mm bzw. DS(20) (variabel)

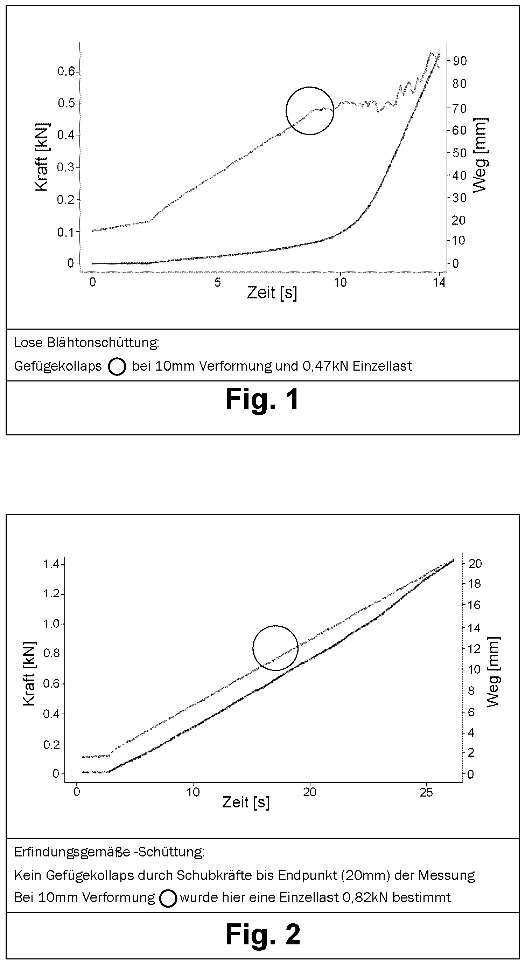

Die in den Figuren 1 und 2 wiedergegebenen Tabellen zeigen das Prüfergebnis für eine lose Blähtonschüttung und im Vergleich hierzu das Prüfergebnis der erfindungsgemäßen losen Ausgleichsschüttung

Fig. 2 zeigt, dass die erfindungsgemäße Ausgleichsschüttung bei einer Schichtdicke von 100 mm und einem Einzellasteintrag auf eine quadratische Fläche von 10.000 mm² der Ausgleichsschüttung bis zu einer Verformung von 10 mm, vorzugsweise bis zu einer Verformung von 20 mm, keinen Gefügekollaps bzw. kein Stabilitätsversagen erleidet. Bei dem durchgeführten Test führte weder eine Verformung von 10 mm bei einer wirkenden Einzellast von 0.82 kN noch eine Verformung von 20 mm bei einer wirkenden Einzellast von mehr als 1.3 kN zu einem Gefügekollaps bzw. zu einem Stabilitätsversagen.

Demgegenüber zeigte ein Vergleichstest mit einer losen Blähton-Ausgleichsschüttung gemäß Fig. 1 bereits bei einer Verformung von 10 mm und einer Einzellast von 0.47 kN einen Gefügekollaps bzw. ein Stabilitätsversagen.

Bei den zuvor beschriebenen Belastungstests wird die Schichtdicke, d. h. die Schütthöhe, von dem Untergrund, auf den die Schüttung aufgebracht wird, bis zum Schüttungsplanum gemessen. Die Schichtdicke bestimmt demnach die Erstreckung der Ausgleichsschüttung senkrecht zum Untergrund. Während der Durchführung der Belastungstests wurde die Einzellast, die auf eine quadratische Fläche mit einer Seitenlänge von 100 mm auf das Schüttungsplanum in Wirkrichtung der Gravitationskraft wirkt, im Sekundentakt um 0.05 kN erhöht. Gleichzeitig wurde die Verformung, d. h. die Verformung des Schüttungsplanums in Richtung der Gravitationskraft, sowie die applizierte Einzellast gemessen. Die Verkrallung und die Reibung zwischen den Holzspänen der Ausgleichsschüttung führen zu einer gesteigerten Lagestabilität der erfindungsgemäßen Ausgleichsschüttung.

In einer bevorzugten Ausführungsform weist die Ausgleichsschüttung eine Schütthöhe von 30 mm bis 200 mm auf. Die minimale Schütthöhe von 30 mm entspricht somit dem Dreifachen der maximalen Korndimension Jedenfalls einzelne Holzspäne können aber auch eine andere Größtkorndimensionierung aufweisen.

Abschließend sei erwähnt, dass die erfindungsgemäße Ausgleichsschüttung aus mineralisierten Holzspänen entsprechend der vorangegangenen Beschreibung eine ökologische Alternative zu bestehenden Ausgleichsschüttungen, beispielsweise zu Ausgleichsschüttungen aus Blähton, bildet, wobei gleichzeitig vorteilhafte mechanische Eigenschaften, insbesondere in Bezug auf die Lagesicherheit, erreicht werden.

## Patentansprüche

1. Ausgleichsschüttung für Fußbodenaufbauten im Wesentlichen bestehend aus mineralisierten Holzspänen, **dadurch gekennzeichnet, dass** ein Teil der Holzspäne ein Längen-Breitenverhältnis von ≤ 3:1 aufweist und dass der Anteil der Holzspäne mit dem Längen-Breitenverhältnis von ≤ 3:1 am gesamten Volumen der Ausgleichsschüttung > 50 Vol. % beträgt.

2. Ausgleichsschüttung nach Anspruch 1, **dadurch gekennzeichnet, dass** die Holzspäne kubisch, länglich oder in Form von Hobelspänen ausgebildet sind.

3. Ausgleichsschüttung nach einem der vorherigen Ansprüche, **dadurch gekennzeichnet, dass** die Holzspäne eine mineralische Ummantelung aufweisen.

4. Ausgleichsschüttung nach Anspruch 3, **dadurch gekennzeichnet, dass** die Ummantelung ein mineralisches Bindemittel und weitere mineralische Feinstpartikel aufweist und dass wenigstens 50 % der weiteren mineralischen Partikel einen Partikeldurchmesser von 0,05 bis 0,7 µm aufweisen.

5. Ausgleichsschüttung nach Anspruch 4, **dadurch gekennzeichnet, dass** der Anteil der mineralischen Feinstpartikel zwischen 0,5 und 2 Gew.-% bezogen auf das Gesamtgewicht der Ausgleichsschüttung beträgt.

6. Ausgleichsschüttung nach einem der vorherigen Ansprüche, **dadurch gekennzeichnet, dass** die Ausgleichsschüttung eine Schüttdichte < 1000 kg/m³, vorzugsweise < 500 kg/m³, aufweist.

7. Ausgleichsschüttung nach einem der vorherigen Ansprüche, **dadurch gekennzeichnet, dass** die Ausgleichsschüttung bei einer Schichtdicke von 100 mm, einem Einzellasteintrag auf eine quadratische Fläche von 10.000 mm² der Ausgleichsschüttung bis zu einer Verformung von 10 mm, vorzugsweise bis zu einer Verformung von 20 mm keinen Gefügekollaps bzw. kein Stabilitätsversagen erleidet.

8. Ausgleichschüttung nach einem der vorherigen Ansprüche, **dadurch gekennzeichnet, dass** die Ausgleichschüttung eine Schütthöhe zwischen 30 mm und 200 mm aufweist.
